# EUROPEAN PATENT APPLICATION

(11) **EP 4 838 252 A1**
(43) Date of publication of application: **11.11.2026**
(21) Application number: 25736319.2
(22) Date of filing: 03.01.2025
(51) Int. Cl.: G01S 7/40, G01S 13/86, G01S 13/931

(54) **RADAR SENSOR ALIGNMENT MODULE FOR VEHICLE**

(30) Priority: 05.01.2024 KR 20240002479
(71) Applicant: LG Innotek Co., Ltd., Seoul 07796 (KR)
(72) Inventor: KANG, Seok Hyun, Seoul 07796 (KR); HONG, Young Hoon, Seoul 07796 (KR); HONG, Young Jae, Seoul 07796 (KR)
(74) Representative: Plasseraud IP
(86) International application number: PCT/KR2025/000174
(87) International publication number: WO 2025/147165

(57) **Abstract**

A sensor alignment module according to an embodiment of the present invention comprises: a processing unit for receiving radar data sensed by a radar and configuring a correction angle for the radar data by using the radar data; and a communication unit for communicating with a cloud server, wherein the processing unit adjusts the correction angle through the cloud server when it is determined that the correction angle for the radar data needs to be adjusted.

## Description

### [Technical Field]

The present disclosure relates to a power conversion device, and more specifically, to a sensor alignment module that aligns the angle of a radar sensor using a cloud, and a vehicle including the same.

### [Background Art]

Radar sensors mounted on vehicles transmit radio waves through a transmitting antenna and receive reflected waves returning from a target to detect the distance or moving velocity of that target. Since radar sensors are mounted on the exterior of the vehicle, vibrations generated during vehicle movement can cause them to shift from their initial position, resulting in misalignment. When the sensor is misaligned, the angle of misalignment must be aligned to correct errors in the sensor data; however, there is a problem in that calculating the correction angle required to correct these errors consumes a significant amount of resources.

### [Disclosure]

### [Technical Problem]

An object of the present disclosure is to provide a sensor alignment module that aligns the angle of a radar sensor using a cloud, and a vehicle including the same.

### [Technical Solution]

In order to solve the technical problem, according to an embodiment of the present disclosure, a sensor alignment module includes a processing unit configured to receive radar data sensed by a radar and set a correction angle for the radar data using the radar data; and a communication unit configured to communicate with a cloud server, in which the processing unit adjusts the correction angle through the cloud server when it is determined that adjustment of the correction angle for the radar data is necessary.

In addition, the processing unit may determine whether the radar data satisfies a correction angle adjustment condition, and when the correction angle adjustment condition is satisfied, calculate a first deformation angle of the radar from the radar data, determine whether a first correction reflection angle, which reflects a currently set correction angle to the first deformation angle, be within a first threshold angle, and determines whether to adjust the correction angle according to the result.

In addition, the processing unit, when the first correction reflection angle deviates from the first threshold angle, may transmit the radar data to the cloud server and receives the correction angle to be changed from the cloud server.

In addition, the radar data may be data according to the coordinate system of the radar, and the processing unit, when the first correction reflection angle is within the threshold angle, may convert the radar data into second data according to the coordinate system of the vehicle, calculate a second deformation angle from the second data, determine whether the second correction reflection angle, which reflects the currently set correction angle in the second deformation angle, be within the second threshold angle, and determine whether to adjust the correction angle based on whether the result is the same as the result of determining whether the first correction reflection angle is within the first threshold angle.

In addition, the processing unit may changes the result of determining whether to adjust the correction angle using the first result when the case where the second result of determining whether the second correction reflection angle is within the second threshold angle and the first result of determining whether the first correction reflection angle is within the first threshold angle is repeated by a preset number of times or more.

In addition, the processing unit may adjust the correction angle through the cloud server when the first correction reflection angle is within the first threshold angle and the case where the first result and the second result are different is repeated by the preset number of times or more, and maintain the current correction angle when the first correction reflection angle deviates the first threshold angle and the case where the first result and the second result are repeated by the preset number of times or more.

In addition, the processing unit may receive vehicle information from a vehicle and use the vehicle information to determine whether the radar data satisfies the correction angle adjustment condition.

In addition, the vehicle information may include at least one of yaw data, acceleration data, and velocity data.

In addition, the communication unit may transmit the radar data, unique identification information of the radar data, and timestamp to the cloud server, receive the data, unique identification information, timestamp, and correction angle from the cloud server, and change the correction angle according to the radar data having a timestamp later than the timestamp corresponding to the earliest time point among the radar data transmitted to the cloud server, to a new correction angle.

In addition, the sensor alignment module further includes a storage unit configured to store the radar data and the initial sensor position information of the radar, the processing unit may adjust the correction angle of the radar data using the radar data stored in the storage unit.

To solve the technical problem, according to an embodiment of the present disclosure, a vehicle includes a sensing unit including a radar; a storage unit for storing data of the sensing unit; and a processing module for correcting data of the sensing unit, in which the processing module includes a processing unit that receives radar data sensed by the radar and sets a correction angle for the radar data using the radar data; and a communication unit that communicates with the cloud server, the processing unit adjusts the correction angle through the cloud server when it determines that adjustment of the correction angle for the radar data is necessary.

### [Advantageous Effect]

According to embodiments of the present disclosure, by calculating the sensor correction angle in a cloud environment rather than in a vehicle, the misaligned angle of the sensor can be corrected without using vehicle resources. In addition, an accurate correction angle can be calculated by utilizing a large amount of data from a cloud server.

### [Description of Drawings]

FIG. 1 is a block diagram illustrating a sensor alignment module according to one embodiment of the present disclosure.
FIGS. 2 to 8 are drawings for explaining a sensor alignment module according to an embodiment of the present disclosure.
FIGS. 9 to 14 are drawings for explaining a sensor alignment module according to another embodiment of the present disclosure.
FIG. 15 is a block diagram illustrating a vehicle according to one embodiment of the present disclosure.

### [Best Mode]

Hereinafter, preferred embodiments of the present disclosure will be described in detail with reference to the attached drawings.

However, the technical idea of the present disclosure is not limited to some of the embodiments described, but can be implemented in various different forms, and within the scope of the technical idea of the present disclosure, one or more of the components between the embodiments can be selectively combined or substituted and used.

In addition, terms (including technical and scientific terms) used in an embodiment of the present disclosure can be interpreted as meanings that can be generally understood by a person having ordinary knowledge in the technical field to which the present disclosure belongs, unless explicitly and specifically defined and described, and terms that are commonly used, such as terms defined in a dictionary, can be interpreted in consideration of the contextual meaning of the related technology.

In addition, terms used in the embodiment of the present disclosure are used to describe the embodiments and are not intended to limit the present disclosure.

In this specification, the singular may also include the plural unless specifically stated otherwise in the phrase, and when it is described as "at least one (or one or more) of A, B, C", it may include one or more of all combinations that can be combined with A, B, C.

In addition, in describing components of the present embodiment of the present disclosure, terms such as first, second, A, B, (a), (b), or the like may be used. These terms are only intended to distinguish the components from other components, and are not intended to limit the nature, order, or sequence of the components.

In addition, when a component is described as being 'connected', 'coupled', or 'accessed' to another component, it may include not only cases where the component is 'connected', 'coupled', or 'accessed' directly to the other component, but also cases where the component is 'connected', 'coupled', or 'accessed' by another component between the component and the other component.

In addition, when described as being formed or disposed "above" or "below" each component, "above" or "below" includes not only the case where the two components are in direct contact with each other, but also the case where one or more other components are formed or disposed between the two components. In addition, when expressed as "above" or "below", the meaning of the downward direction as well as the upward direction based on one component may be included.

Variations according to the present embodiment may include some components of each embodiment and some components of other embodiments. In other words, a variation may include one of the various embodiments, but with some components omitted and some components of a corresponding other embodiment included. Alternatively, the opposite is also possible. Features, structures, effects, or the like described in the embodiments are included in at least one embodiment and are not necessarily limited to only one embodiment. Furthermore, features, structures, effects, or the like exemplified in each embodiment may be combined or modified and implemented in other embodiments by a person skilled in the art to which the embodiments belong. Therefore, details regarding such combinations and modifications should be interpreted as being included within the scope of the embodiments.

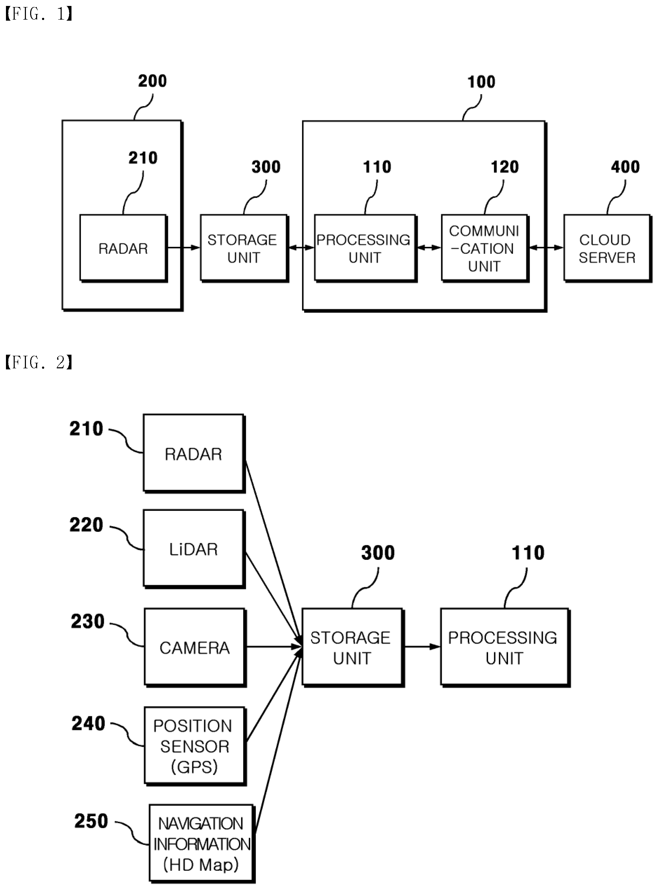

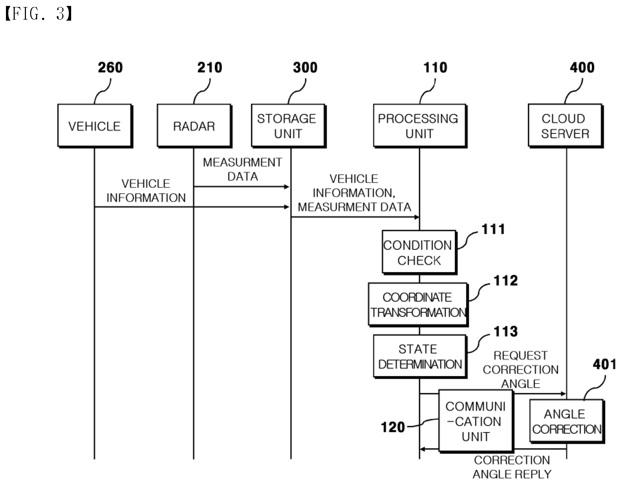

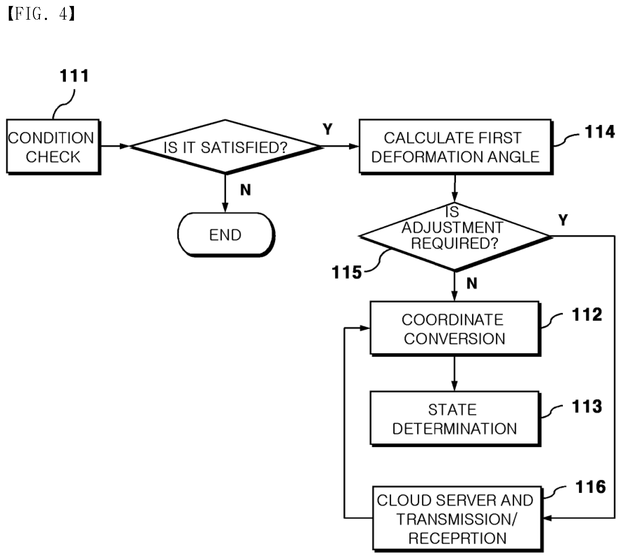

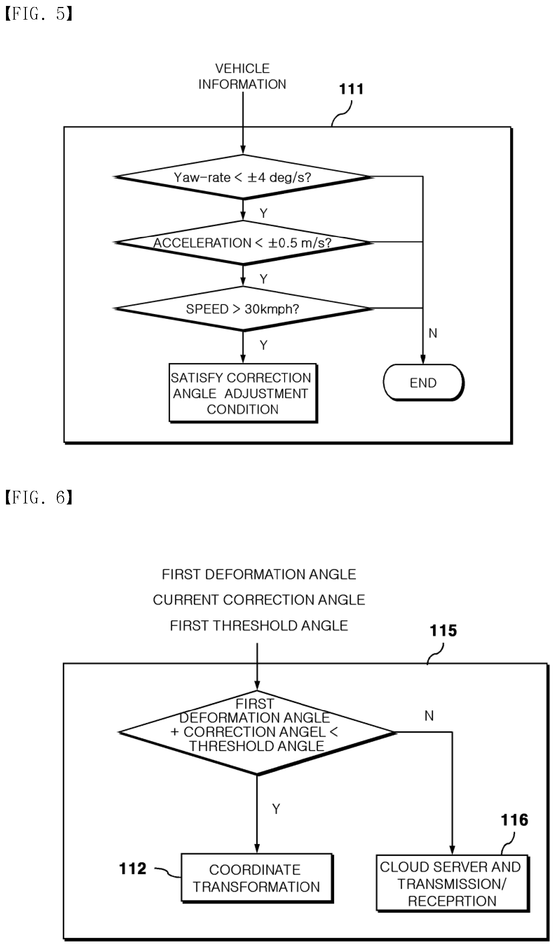

FIG. 1 is a block diagram illustrating a sensor alignment module according to one embodiment of the present disclosure, and FIGS. 2 to 8 are drawings for explaining a sensor alignment module according to an embodiment of the present disclosure.

The present disclosure is composed of a processing unit 110 and a communication unit 120 according to an embodiment. A sensor alignment module 100 according to an embodiment of the present disclosure may be mounted on a vehicle 600. The vehicle 600 may include a sensing unit 200 including a radar 210, and the sensor alignment module 100 may align the sensing units 200 by correcting the misaligned angles. The sensing unit 200 may include a radar 210, LiDAR 220, a position sensor (GPS), 240, or the like, and may include a camera 230, navigation information (HP Map), 250, or the like. The vehicle 600 may be an autonomous driving vehicle or an autonomous driving robot, and may generate an autonomous driving path using data from the sensing unit 200 and control the vehicle accordingly. The vehicle 600 may be a Software Defined Vehicle (SDV), which is a vehicle that controls and manages hardware using software.

The radar 210 can be mounted on a vehicle 600, and may become misaligned from the installed position thereof due to vibrations caused by the movement of the vehicle 600. To ensure accurate measurement of the radar 210, a correction angle must be applied to correct the misaligned angle. Since the misaligned angle may change continuously due to vibrations, the correction angle must also be adjusted accordingly.

To this end, the processing unit 110 receives radar data sensed by the radar 210 and sets a correction angle for the radar data using the radar data. If the processing unit 110 determines that correction angle adjustment is necessary, the cloud server 400 for correction angle adjustment is used. The process of adjusting the correction angle will be explained in detail below.

The communication unit 120 can communicate with the cloud server 400. The communication unit 120 can communicate with the cloud server 400 via wireless communication. The communication unit 120 can transmit a correction angle request to the cloud server 400 and receive the correction angle calculated by the cloud server 400.

The processing unit 110 can transmit a correction angle request to the cloud server 400 when correction angle adjustment is necessary, and can use the radar data to determine whether correction angle adjustment is necessary. Radar data generated by the radar 210 is stored in the storage unit 300, and the processing unit 110 can determine whether correction angle adjustment is necessary using the radar data stored in the storage unit 300. The storage unit 300 can receive and store data from sensors included in the sensing unit 200. Since the measurement cycle may differ for each sensor, the storage unit 300 can store the data as an integrated storage unit that integrates the data from the sensors. The storage unit 300 can store timestamps, which are the time collected for each data.

The processing unit 110 determines whether the radar data satisfies the correction angle adjustment condition, and if the correction angle adjustment condition is satisfied, calculates the first deformation angle of the radar 210 from the radar data, determines whether the first correction reflection angle, which reflects the currently set correction angle in the first deformation angle, is within the first threshold angle, and determines whether to adjust the correction angle according to the result.

The processing unit 110 can determine whether the radar data first satisfies the correction angle adjustment condition. If the radar data includes information that can determine the degree to which the radar 210 is misaligned, the correction angle adjustment can be determined using the radar data, thereby first determining whether the radar data satisfies the correction angle adjustment condition.

The radar data is data collected from the radar 210 and may include data obtained by post-processing signals reflected from an object by the radar 210 and mounting information when the sensor is initially mounted. The result of post-processing the reflected signals is represented as points on a coordinate system, and these points may be referred to as a point cloud or a detection list. Each point may include range, azimuth, elevation, power, radial velocity, and initial sensor position information. Here, range is the distance to the detected point relative to the radar 210, azimuth is the angle on the horizontal plane of the detected point relative to the front of the radar, elevation is the angle on the vertical plane of the detected point relative to the front of the radar, power is the reflected signal strength of the detected point, line-of-sight velocity is the relative velocity of the detected point, and initial sensor position information is the mounting angle used to correct errors occurring during mounting for each sensor at the time of shipment, and this angle may be used as a relative standard for calculating the coordinates of the point clouds thereafter.

In the process of converting the coordinate plane of the point cloud of the radar 210 into the coordinate plane of the vehicle, the existing mounting position of the radar 210 is used as a reference. However, due to an accident or a major impact, the position of the mounted radar 210 may differ from the existing mounting position. As such, if the mounting position of the radar 210 misaligns from the existing position, the mounting position may be misaligned during the process of converting the coordinate plane of the point cloud, and thus it may be converted to an incorrect coordinate position.

To eliminate such errors, auto alignment or angle correction can be performed, and the current misaligned angle of the radar can be calculated using a detection list from a specific environment, such as a correction angle adjustment condition. For example, radar data measured in a road environment where objects with high reflection intensity, such as straight guardrails, are disposed in a straight line can be used.

This process can be referred to as a condition check process. The processing unit 110 can determine that radar data containing information that objects with high reflection intensity, such as guardrails, are disposed in a preset number or more satisfies the corresponding condition.

At this time, the processing unit 110 can perform the condition check process by using vehicle information together. At this time, the processing unit 110 can use yaw rate, acceleration, and vehicle velocity as vehicle information. The yaw rate is information indicating the degree to which the front part of the vehicle 600 rotates.

The processing unit 110 can determine that the correction angle adjustment condition is satisfied when the yaw rate, acceleration, and velocity are under preset conditions. The processing unit 110 can determine that the correction angle adjustment condition is satisfied when the yaw rate is less than ±4 deg/s, the acceleration is less than ±0.5 m/s, and the velocity is greater than 30 kmph. In other words, the processing unit 110 can determine whether to adjust the correction angle using radar data under the corresponding condition when the condition of moving straight at a constant velocity is satisfied in a road environment where objects with strong reflectivity are disposed in a straight line is satisfied.

The processing unit 110 can check 111 the correction angle adjustment condition and, when the condition is satisfied, calculate the first deformation angle of the radar 210 from the radar data. Using the result of measuring the radar data and the result derived according to vehicle information, the first deformation angle, which is the misaligned deformation angle of the radar sensor, can be calculated 114 using the difference between the measured angle and the actual angle.

The processing unit 110 can calculate a first correction reflection angle by reflecting the currently set correction angle to the calculated first deformation angle, determine whether the first correction reflection angle is within the first threshold angle, and determine whether to adjust the correction angle according to the result. The first threshold angle can be used to calculate the first correction reflection angle by reflecting the initial or previously set correction angle to the first deformation angle, and to determine 115 whether the first correction reflection angle needs to be adjusted. The first threshold angle may be an allowable error range, may be set for the safety of the vehicle, or may be set by the user. Here, the first correction reflection angle can be calculated as follows.$Angle Offset = Raw Angle Offset + Correction Angle$

Here, Angle Offset is the first correction reflection angle, Raw Angle Offset is the first deformation angle, and Correction Angle is the current correction angle. The first correction reflection angle may indicate the misalignment degree relative to the initial radar sensor position. If the first correction reflection angle is within the first threshold angle, it is determined that the radar 210 is located in the On-position, which is a position that is not misaligned. If the first correction reflection angle exceeds the first threshold angle, it is determined that the radar 210 is located in the Off-position, which is a misaligned position. When the current state is determined to be Off-position, correction angle adjustment can be performed via the cloud server 400.

When the first correction reflection angle exceeds the first threshold angle, the processing unit 110 determines that correction angle adjustment is necessary, transmits radar data to the cloud server 400, and receives the correction angle to be changed from the cloud server 400. If the first correction angle is outside the first threshold angle, a request for a correction angle can be transmitted to the cloud server 400 along with radar data through communication with the cloud server 400.

Radar data of an autonomous driving vehicle contains a large amount of information, and a large amount of resources are required to calculate the correction angle from it. Furthermore, the more data is utilized, the more accurate the calculation of the correction angle becomes possible. The sensor alignment module 100 according to an embodiment of the present disclosure can calculate the correction angle by utilizing a cloud server 400 that can utilize a large amount of resources, rather than within the module or within the vehicle 600.

The cloud server 400 may be a module containing software used in a cloud environment outside the vehicle 600. The cloud server 400 may include various algorithms for calculating the correction angle of the radar 210 and may include a neural network trained to calculate the correction angle from radar data through machine learning, or the like. In addition, the cloud server 400 may use various methods for calculating the correction angle from radar data.

When communicating with the cloud server 400, the communication unit 120 may transmit the radar data, the unique identification information of the radar data, and a timestamp to the cloud server 400, and receive the data, the unique identification information, the timestamp, and the correction angle from the cloud server 400.

The timestamp is stored together when radar data is generated from the radar 210 and stored in the storage unit 300, and when the radar data satisfies the correction angle adjustment condition, the unique identification information may be assigned and stored. Unique ID is information that can distinguish data satisfying condition verification, and can be assigned using a sequentially assigned frame number or the hash value of the incoming data. Here, a hashing function is a function that maps data of arbitrary length to data of fixed length, and a hash may refer to a value obtained by the hashing function. When the communication unit 120 transmits radar data to the cloud server 400, the communication unit can transmit the timestamp of the radar data and the unique ID together.

The communication unit 120 can store sensor data including radar data in a data queue 121 and transmit a plurality of stored sensor data to a cloud server 400. At this time, the number of sensor data stored in the data queue 121 may be limited. Therefore, in order to check which sensor data is being transmitted when transmitting to the cloud server 400, a start timestamp may be set and stored. If the current start timestamp is null, the timestamp of the first sensor data to be stored may be set as the start timestamp and stored 122. When the sensor data stored in the data queue 121 is transmitted to the cloud server 400, the validity can be determined by comparing it with the timestamp of the data subsequently received from the cloud server 400 using the currently set start timestamp.

The cloud server 400 can calculate the correction angle of the radar 210 using the sensor data including radar data received through the communication unit 120. The cloud server 400 may include various algorithms for calculating the correction angle of the radar 210 and may include a neural network trained to calculate the correction angle from radar data through machine learning, or the like. In addition, the cloud server 400 may use various methods for calculating the correction angle from radar data.

The cloud server 400 may transmit sensor data, unique identification information and timestamps of the sensor data, and the correction angle calculated from the sensor data to the communication unit 120.

The communication unit 120 can change the correction angle according to radar data having a timestamp later than the start timestamp corresponding to the earliest radar data among the radar data transmitted to the cloud server 400 to a new correction angle. The communication unit 120 compares 123 the timestamp of the received sensor data with the currently set start timestamp. If the timestamp of the currently received sensor data is a timestamp prior to the currently set start timestamp, it is not data for adjusting the correction angle, so in this case, the procedure can be terminated without adjusting the correction angle. If the timestamp of the currently received sensor data is a timestamp prior to the currently set start timestamp, it is data for adjusting the correction angle, so the processing unit 110 can adjust the correction angle by changing the correction angle using the correction angle calculated from the corresponding sensor data.

The processing unit 110 can convert radar data into second data according to the vehicle's coordinate system when the first correction reflection angle is within the first threshold angle. The processing unit 110 can determine that the radar 210 is located in an on-position, which is a position where it is not misaligned. Since the radar data is data according to the coordinate system of the radar 210, if it is determined that it corresponds to the on-position in the radar's coordinate system, the processing unit 110 can go through a process of checking once again whether correction angle adjustment is unnecessary in the vehicle's coordinate system as well. To this end, a coordinate transformation 112 can be performed to convert the radar coordinate system into the vehicle's coordinate system.

Subsequently, if the first correction reflection angle is within the threshold angle, the processing unit 110 converts the radar data into second data according to the vehicle's coordinate system, calculates a second deformation angle from the second data, determines whether the second correction reflection angle, which reflects the currently set correction angle in the second deformation angle, is within the second threshold angle, and determines whether to adjust the correction angle based on whether the result is the same as the result of determining whether the first correction reflection angle is within the first threshold angle.

The second deformation angle is calculated in the vehicle coordinate system, the second correction reflection angle reflecting the currently set correction angle is calculated, and the second correction reflection angle is determined to be within the second threshold angle, and based on the result, it can be checked whether it is the same as the current state determined earlier.$Angle Offset_ 2 = Raw Angle Offset_ 2 + Correction Angle_ 2$

Here, Angle Offset_2 is the second correction reflection angle, Raw Angle Offset_2 is the second deformation angle, and Correction Angle_2 is the current correction angle. The second correction reflection angle can represent the degree of misalignment in the vehicle's coordinate system, and if the second correction reflection angle is within the second threshold angle, it is determined that the vehicle is located in an on-position, which is a position that is not misaligned in the vehicle's coordinate system, and the Correct Angle flag can be set. If the second correction reflection angle exceeds the second threshold angle, the Correct Angle flag can be cleared.

The processing unit 110 can change the result of determining whether to adjust the correction angle using the first result when the second result of determining whether the second correction reflection angle is within the second threshold angle and the first result of determining whether the first correction reflection angle is within the first threshold angle are different are repeated by a preset number of times or more. By comparing the first result, which determines whether the first correction reflection angle is within the first threshold angle, with the second result, which determines whether the second correction reflection angle is within the second threshold angle, it can be verified whether the first result was an accurate determination.

At this time, it can be determined whether the first result, which determines whether the first correction reflection angle is within the first threshold angle, is a result derived from normal radar data or a result derived from radar data that is incorrectly measured or contains errors. To this end, the first result and the second result are compared a plurality of times, and if the case where the first result and the second result are different is repeated by a preset number of times or more, the result determining whether to adjust the correction angle using the first result can be changed. In other words, even if the first result is determined to be on-position, if the case where the first result and the second result are different is repeated by a preset number of times or more, the current state is changed to off-position, and the correction angle can be adjusted through the cloud server 400 according to the off-position. Conversely, even if the first result is determined to be off-position, if the case where the first result and the second result are different is repeated by a preset number of time or more, the current state may be changed to on-position, and the correction angle may not be adjusted through the cloud server 400 according to the off-position.

In other words, a state determination 113 can be performed using the coordinate-transformed data from the coordinate transformation 112.

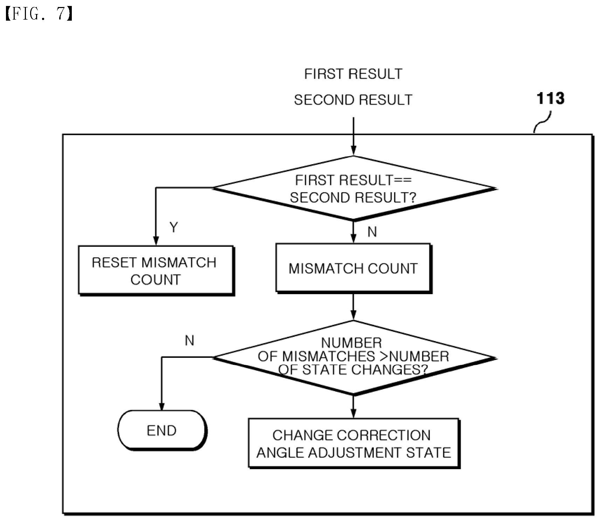

As illustrated in FIG. 7, a comparison can be made to see if the first result and the second result are the same. If the first result and the second result are different, the Different State Counter value can be increased, and if the first result and the second result are the same, the Different State Counter can be reset. After increasing the Different State Counter value because the first result and the second result are different, if the number of times the Different State Counter exceeds the number of times the state is changed, the current state can be changed according to whether to adjust the correction angle.

The processing unit 110 can adjust the correction angle through the cloud server 400 if the first correction reflection angle is within the first threshold angle and the case where the first result and the second result are different is repeated by a preset number of times or more. In other words, the correction angle can be adjusted through the cloud server 400 when the first result is in the on-position or changes to the off-position through repeated comparison of the first result and the second result.

The processing unit 110 can maintain the current correction angle when the first correction reflection angle misaligns from the first threshold angle and the first result and the second result are repeated by a preset number of times or more. In other words, the correction angle may not be adjusted if the first result is off-position or changes to on-position through repeated comparison of the first result and the second result.

The state determination 113 is a process to prevent malfunctions caused by phenomena where values spike using Hit or Miss, and various State Decision methods can be used. For example, if Hit, Miss, Hit, Hit occurs sequentially, the change can be made if Hit occurs twice in a row. Since radar data collected in the actual environment may be false positives, it can be determined whether there is the misalignment if a specified number of consecutive occurrences is exceeded.

Additionally, the Temporary Current State and the Current State can be distinguished by comparing the Unique ID of the data used for coordinate transformation 112 and state determination 113 with the Recent Unique ID. A comparison of Unique IDs can be performed to check that all data stored in the cloud server 400 while the mounted state is off-position has been reflected up to the latest data. When the mounted state is on-position, the current state can also be updated immediately because the Unique ID of the data is the Recent Unique ID.

For example, when the current state is on-position, the current unique ID is 5, the State Change Threshold is 3, the mismatch count is 0, and the Correct Angle and Unique ID values are consecutively (True, 1), (False, 2), (False, 3), (False, 4), and (False, 5), when (False, 5) is received, the mismatch count exceeds the state change threshold; therefore, the temporary current state is changed to off-position, the mismatch count is reset, and since the current unique ID and the unique ID of the last processed data are both 5, the current state can also be changed to off-position.

As another example, when the current state is off-position, the current unique ID is 6, the State Change Threshold is 2, and the mismatch count is 0, and the Correct Angle and Unique ID values are consecutive (True, 1), (True, 2), (True, 3), (False, 4), (False, 5), (False, 6), when (True, 3) is received, since the mismatch count exceeds the state change threshold, the temporary current state is changed to on-position, the mismatch count is reset, and the current state can be maintained off-position because the current unique ID and the unique ID of the last processed data are different 6, 3. Afterwards, when (False, 6) is received, the inconsistency count exceeds the number of state changes, so the temporary current state is changed to off-position and the Different State Counter is initialized to 0. Since the current unique identification information and the unique identification information of the last processed data are the same at 6, the current state can be maintained off-position according to the temporary current state, and the correction angle can be adjusted through the cloud server 400 according to the off-position.

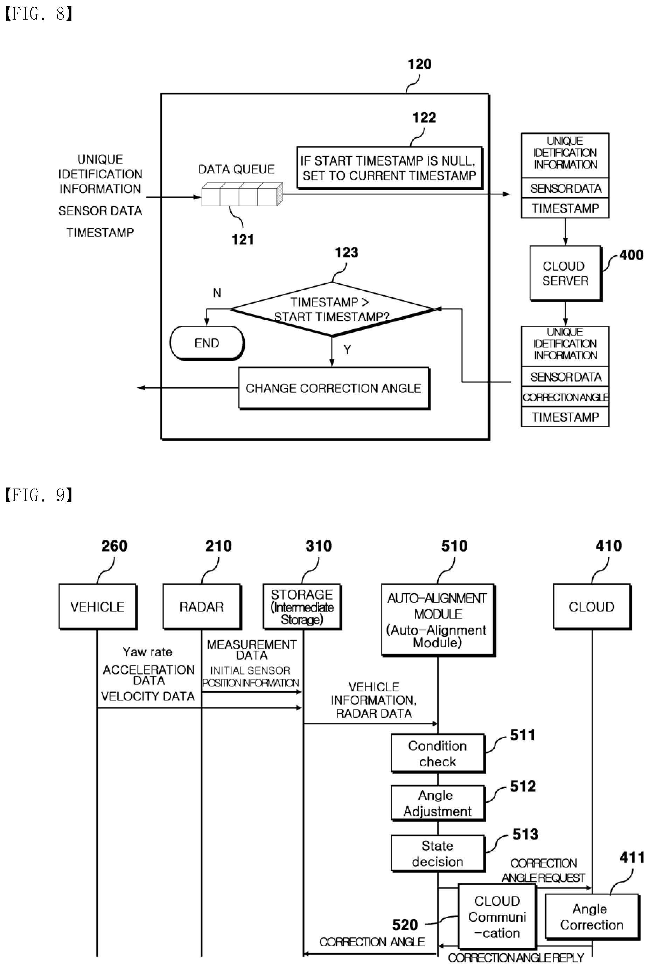

FIGS. 9 to 14 are drawings for explaining a sensor alignment module according to another embodiment of the present disclosure. The detailed description of each component in FIGS. 9 to 14 corresponds to the detailed description of each component in FIGS. 1 to 8, so redundant descriptions will be omitted below.

The sensor alignment module according to an embodiment of the present disclosure may be an Auto-Alignment Module 510. Vehicle information and radar data received from a sensing unit 200 including a vehicle 260 and a radar 210 may be stored in a storage (Intermediate Storage) 310. Here, the sensor receives data, the storage 310 is a data integration storage for sensors collected at different intervals, the Auto-Alignment Module 510 is included in a software module used within the vehicle, and the cloud 410 may be a software module used in a cloud environment other than the vehicle. Since the data collection interval may differ for each sensor, the storage 310 may store the latest information collected for each sensor and store the time of collection together.

Vehicle information (Vehicle Info) is information provided by the vehicle 600 by default and may include yaw rate, acceleration, and velocity collected from each sensor within the vehicle.

Radar sensor information Radar Info is information collected from the radar 210, and may include information obtained by post-processing signals reflected from an object from the radar 210 and mounting information when the sensor is first mounted. The radar sensor information may include a Detection List in which the result of post-processing the reflected signals is represented as a point on a coordinate system, and each point may include Range, Azimuth, elevation, Power, Radial velocity, and Initial Sensor Position.

As the trend shifts toward Software Defined Vehicles SDV, Software Defined Components SDC are also increasing. This creates a constraint where a single component/module cannot use the limited vehicle memory/storage space alone, and there is a need to increase efficiency. The automatic alignment module 510 according to an embodiment of the present disclosure applies data and algorithms required for automatic alignment (auto-alignment) to the cloud (cloud, 410) according to the SDV concept. By using the cloud 410, the computing resources that increase are incomparably larger than before, allowing for the use of complex but more accurate automatic alignment algorithms. Additionally, data usable for complex algorithms (for example, LiDAR, HDMap, or the like for Radar Auto Alignment) can be sent to the cloud 410 and used together.

At this time, data can be acquired (Condition Check, 511) only under specific conditions (for example, a straight line of guardrails or a road where objects with high reflectivity are disposed in a straight line), and a method using a Unique ID & Timestamp to distinguish data (State Decision 513 & Cloud Communication 520) can be applied while using the cloud 410 as a data storage without wasting data.

The sensors update each collected data to the storage 310, and the automatic alignment module 510 performs a condition check 511 on the radar information and vehicle information among the data updated in the storage 310, thereby determining whether the environment meets the conditions. An environment that meets the conditions is a straight road and includes an environment with reflective objects such as guardrails on the left and right sides. If the conditions are met, Valid Data=True is returned, and if they are not met, Valid Data=False is returned. If the environment meets the conditions, a Raw Angle Offset is calculated 514, a Unique ID is assigned to the data, and the unique ID number of the recently collected data is stored (Recent Unique ID, 517). According to the current state of the radar, Angle Adjustment 512 is performed or Cloud Communication 520 is performed.

Raw Angle Offset' is the misaligned angle of the radar before adding the correction angle, and the unique identification information (Unique ID) may be a value that can distinguish data that has passed the condition check 511. For example, it may be a sequentially assigned Frame Number or a hash value of the incoming data, where the hashing function is a function that maps data of arbitrary length to data of fixed length, and the hash may mean a value obtained by the hashing function. The mounting state (Current State) is referred to as On-Position if the degree of misalignment (Angle Offset = Raw Angle Offset + Correction Angle) relative to the Initial Sensor Position that was the standard at the time of shipment of the radar is within the specified misalignment allowable threshold (offset limit), and Off-Position if it is outside.

In the case of on-position, the coordinates of objects detected by radar are calculated in terms of vehicle-relative coordinates through the process of converting the radar coordinate system to the vehicle coordinate system in Angle Adjustment 512, and these values can be used to return whether or not there is misalignment (Correct Angle Flag) based on the data. The whether or not there is misalignment (Correct Angle Flag) indicates whether the sum of the calculated degree of misalignment (Raw Angle Offset) from the data and the currently used correction angle (Correction Angle) is within the allowable misalignment threshold (Offset Limit), and can be True or False. The whether or not there is misalignment (Correct Angle Flag) is a value derived based on a single currently processed data, whereas the mounting state is a value derived by accumulating the misalignment values of consecutive data in State Decision 513, and may represent different values. The mounting state determination (State Decision) 513 can be performed using the returned Current Angle Flag.

In the case of off-position, cloud communication 520 is performed to receive a correction value (Correction Angle) by executing Auto-alignment (angle correction) 411 in the cloud 410, and after receiving the value returned from the cloud 410 through cloud communication, it is checked again through Angle Adjustment 512 and State Decision 153 to properly correct whether the returned correction angle is misaligned, and the mounting state (Current State) can be updated through the final result when all data accumulated during off-position is processed up to the latest data.

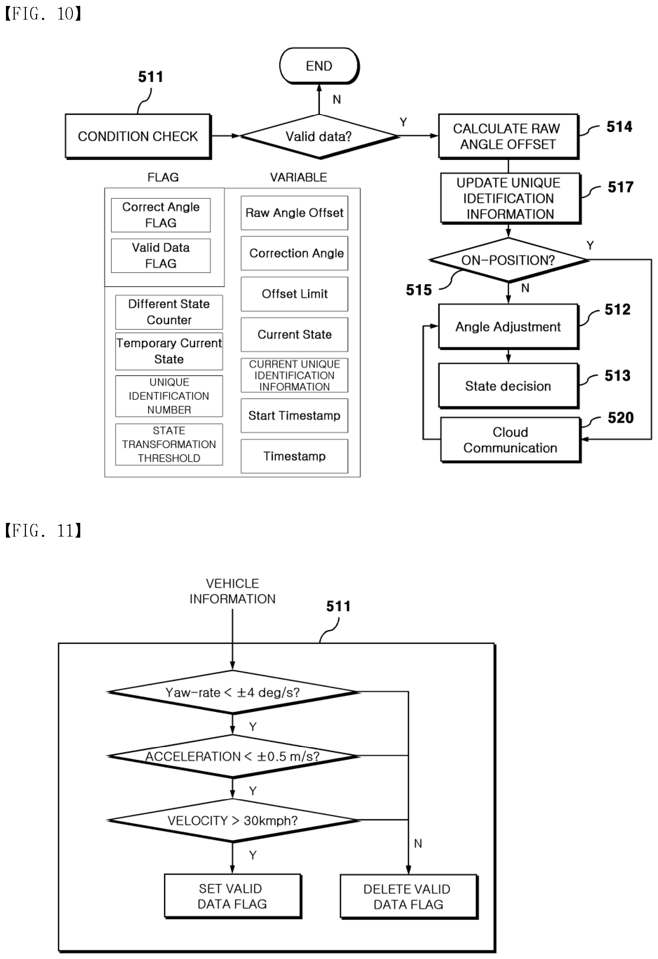

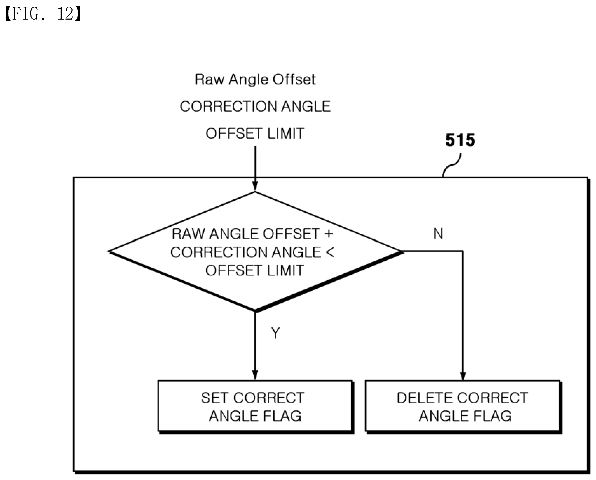

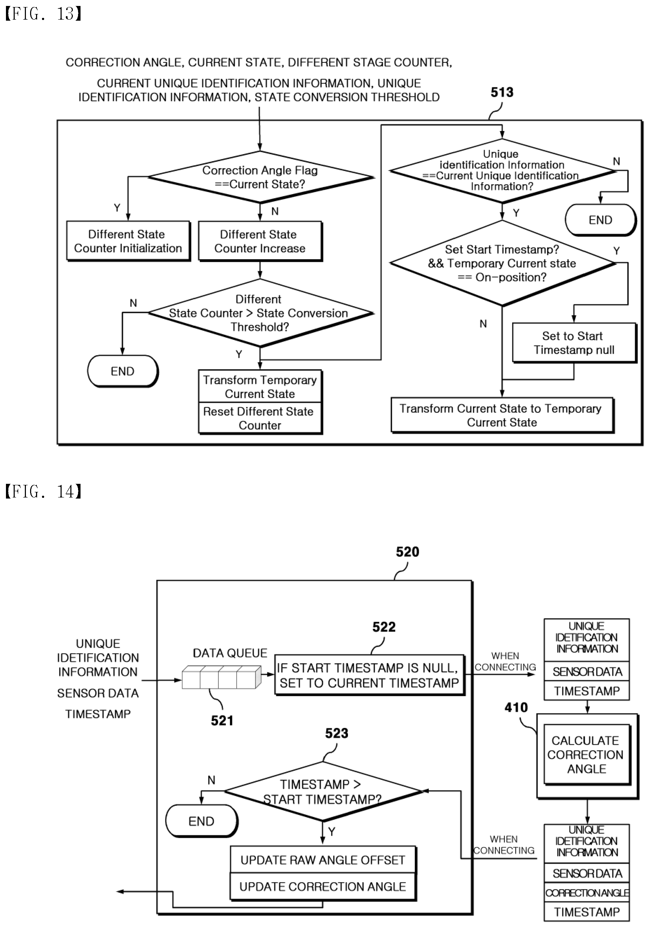

Condition Check 511 can set a valid data flag using yaw rate, acceleration, and velocity as illustrated in FIG. 11, and Angle Adjustment 512 can set a correct Angle flag by determining whether Angle Offset = Raw Angle Offset + Correction Angle is within the Offset Limit as illustrated in FIG. 12. State Decision 513 can determine whether there is misalignment if a specified number of consecutive occurrences are exceeded, considering that radar data collected in the actual environment may be false positives as illustrated in FIG. 13. Additionally, Temporary Current State (temporary mounted state) and Current State (mounted state) can be distinguished by comparing the Unique ID of the data used in Angle Adjustment 512 + State Decision 513 with the Recent Unique ID. A Unique ID comparison is performed to verify that all data stored in the cloud while the equipped state is off-position has been reflected up to the latest data. When the mounted state is on-position, the Unique ID of the data used in Angel Adjust + State Decision becomes the Recent Unique ID, so the Current State can also be updated immediately. As illustrated in FIG. 14, in Cloud Communication 520, when the mounted state is off-position, data that has passed the Condition Check 511 among the collected data is received. When the first data is received, if the Start Timestamp is not stored, the Timestamp of the incoming data can be stored 522 to the Start Timestamp. Here, the Start Timestamp refers to the time of collection (timestamp) of the very first data received when the mounted state changes from on-position to off-position. The Start Timestamp can be initialized to a Null value when the equipped state changes from off-position to on-position in State Decision 513.

Data received via cloud communication 520 is stored in the data queue 521. Since data cannot be accumulated indefinitely due to the limited memory within the vehicle, only the pre-designed latest N data points can be accumulated. When connected to the cloud 410, the data that has been in the data queue 521 for the longest time can be transmitted to the cloud 410.

The data transmitted to and received from the cloud 410 may be as follows. Unique identification information (Unique ID) is required for data identification and is needed to verify whether the data is the latest in State Decision 513 when the data is returned later. Sensor Data includes data needed to calculate the Correction Angle in the cloud 410, and Raw Angle Offset may be included as it is needed for Angle Adjustment. Other data such as Vehicle Info, Radar Info, and additional LiDAR Info, Camera Info may be changed according to the data required by the Auto-alignment (angle correction) algorithm. A timestamp is a timestamp for the time when the current data was collected, which is needed to filter only the data after the Start Timestamp when the data is returned later. A timestamp may be added to prevent the order of the data from shifting or changing due to communication errors or errors on the cloud side 410. The correction angle is a correction angle value calculated and returned by the cloud 410 and may be included only in the returned information. The correction angle calculated and received by the cloud 410 is used to check the mounting status through Angle Adjustment 512 and State Decision 513, and a Unique ID and Raw Angle Offset may be required for this purpose.

As described above, by calculating the sensor correction angle in a cloud environment rather than in a vehicle, the misaligned angle of the sensor can be corrected without using the vehicle's resources. In addition, an accurate correction angle can be calculated by utilizing a large amount of data from the cloud server.

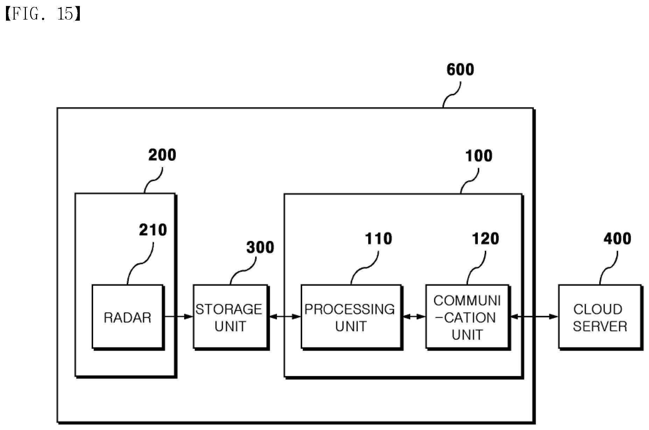

FIG. 15 is a block diagram illustrating a vehicle according to an embodiment of the present disclosure. The detailed description of each component in FIG. 15 corresponds to the detailed description of each component in FIGS. 1 to 8 or each component in FIGS. 9 to 14; therefore, redundant descriptions will be omitted below.

A vehicle 600 according to an embodiment of the present disclosure is composed of a sensing unit 200, a storage unit 300, and a processing module 100, and the processing module 100 may include a processing unit 110 and a communication unit 120.

The sensing unit 200 includes a radar 210, the storage unit 300 stores data from the sensing unit 200, and the processing module 100 corrects the data from the sensing unit 200.

The processing module 100 receives radar data sensed by the radar 210 and includes a processing unit 110 that sets a correction angle for the radar data using the radar data and a communication unit 120 that communicates with a cloud server 400. When the processing unit 110 determines that adjustment of the correction angle for the radar data is necessary, the processing unit adjusts the correction angle through the cloud server 400.

The processing unit 110 determines whether the radar data satisfies the correction angle adjustment condition, and if the correction angle adjustment condition is satisfied, calculates the first deformation angle of the radar from the radar data, determines whether the first correction reflection angle, which reflects the currently set correction angle in the first deformation angle, is within the first threshold angle, and determines whether to adjust the correction angle according to the result.

If the first correction reflection angle deviates from the first threshold angle, the processing unit 110 transmits the radar data to the cloud server 400 and receives the correction angle to be changed from the cloud server 400.

The radar data is data according to the coordinate system of the radar, and the processing unit 110 converts the radar data into second data according to the vehicle's coordinate system when the first correction reflection angle is within the above threshold angle, calculates a second deformation angle from the second data, determines whether the second correction reflection angle, which reflects the currently set correction angle in the second deformation angle, is within the second threshold angle, and determines whether to adjust the correction angle based on whether the result is the same as the result of determining whether the first correction reflection angle is within the first threshold angle.

The processing unit 110 may change the result of determining whether to adjust the correction angle using the first result when the case where the second result of determining whether the second correction reflection angle is within the second threshold angle and the first result of determining whether the first correction reflection angle is within the above first threshold angle is different is repeated by a preset number of times or more.

The processing unit 110 can adjust the correction angle through the cloud server 400 if the first correction reflection angle is within the first threshold angle and the case where the first result and the second result are different is repeated by the above preset number of times or more, and can maintain the current correction angle if the first correction reflection angle is deviated from the first threshold angle and the first result and the second result are repeated by the above preset number of times or more.

The processing unit 110 can receive vehicle information and determine whether the radar data satisfies the correction angle adjustment condition using the vehicle information, and the vehicle information may include at least one of yaw data, acceleration data, and velocity data.

The communication unit 120 transmits the radar data, the unique identification information of the radar data, and the timestamp to the cloud server 400, receives the data, the unique identification information, the timestamp, and the correction angle from the cloud server 400, and can change the correction angle according to the radar data having a timestamp later than the timestamp corresponding to the earliest radar data among the radar data transmitted to the cloud server to a new correction angle.

Meanwhile, embodiments of the present disclosure can be implemented as computer-readable code on a computer-readable recording medium. A computer-readable recording medium includes all types of recording devices in which data that can be read by a computer system is stored.

Examples of computer-readable recording media include ROM, RAM, CD-ROM, magnetic tape, floppy disk, optical data storage device, or the like, additionally, computer-readable recording media may be distributed across networked computer systems, allowing computer-readable code to be stored and executed in a distributed manner. Furthermore, functional programs, codes, and code segments for implementing the present disclosure can be easily inferred by programmers in the art to which the present disclosure belongs.

As described above, the present disclosure has been explained by specific details such as specific components, limited embodiments, and drawings; however, this is provided merely to aid in a more comprehensive understanding of the disclosure, and the disclosure is not limited to the above embodiments. A person skilled in the art can make various modifications and variations from this description.

Accordingly, the scope of the present disclosure is not limited to the described embodiments, and all things equivalent to or having equivalent variations to the claims set forth below, as well as the claims set forth below, shall be considered to fall within the scope of the concept of the present disclosure.

## Claims

1. A sensor alignment module comprising:
a processing unit configured to receive radar data sensed by a radar and set a correction angle for the radar data using the radar data; and
a communication unit configured to communicate with a cloud server,
wherein the processing unit adjusts the correction angle via the cloud server when it is determined that adjustment of the correction angle for the radar data is necessary.

2. The sensor alignment module of claim 1,
wherein the processing unit determines whether the radar data satisfies a correction angle adjustment condition, and when the correction angle adjustment condition is satisfied, calculates a first deformation angle of the radar from the radar data, determines whether a first correction reflection angle, which reflects a currently set correction angle to the first deformation angle, is within a first threshold angle, and determines whether to adjust the correction angle according to the result.

3. The sensor alignment module of claim 2,
wherein the processing unit, when the first correction reflection angle deviates from the first threshold angle, transmits the radar data to the cloud server and receives the correction angle to be changed from the cloud server.

4. The sensor alignment module of claim 2,
wherein the radar data is data according to the coordinate system of the radar, and
wherein the processing unit, when the first correction reflection angle is within the first threshold angle, converts the radar data into second data according to the coordinate system of the vehicle, calculates a second deformation angle from the second data, determines whether the second correction reflection angle, which reflects the currently set correction angle to the second deformation angle, is within the second threshold angle, and determines whether to adjust the correction angle based on whether the result is the same as the result of determining whether the first correction reflection angle is within the first threshold angle.

5. The sensor alignment module of claim 4,
wherein the processing unit changes the result of determining whether to adjust the correction angle using the first result when the case where the second result of determining whether the second correction reflection angle is within the second threshold angle and the first result of determining whether the first correction reflection angle is within the first threshold angle is repeated by a preset number of times or more.

6. The sensor alignment module of claim 5,
wherein the processing unit adjusts the correction angle through the cloud server when the first correction reflection angle is within the first threshold angle and the case where the first result and the second result are different is repeated by the preset number of times or more, and maintains the current correction angle when the first correction reflection angle deviates from the first threshold angle and the case where the first result and the second result are repeated by the preset number of times or more.

7. The sensor alignment module of claim 2,
wherein the processing unit receives vehicle information from a vehicle and uses the vehicle information to determine whether the radar data satisfies the correction angle adjustment condition.

8. The sensor alignment module of claim 7,
wherein the vehicle information comprises at least one of yaw data, acceleration data, and velocity data.

9. The sensor alignment module of claim 1,
wherein the communication unit transmits the radar data, unique identification information of the radar data, and timestamp to the cloud server, receives radar data, unique identification information, timestamp, and correction angle from the cloud server, and changes the correction angle according to the radar data having a timestamp later than the timestamp corresponding to the earliest time point among the radar data transmitted to the cloud server, to a new correction angle.

10. The sensor alignment module of claim 1, comprising:
a storage unit configured to store the radar data and initial sensor position information of the radar,
wherein the processing unit adjusts the correction angle of the radar data using the radar data stored in the storage unit.
